# EUROPÄISCHE PATENTSCHRIFT

(11) **EP 2 899 326 B1**
(45) Veröffentlichungstag und Bekanntmachung des Hinweises auf die Patenterteilung: **20.07.2016**
(21) Anmeldenummer: 14004340.7
(22) Anmeldetag: 19.12.2014
(51) Int. Cl.: E03F 5/04, E04B 1/94, E04D 13/04, F16L 57/04

(54) **WASSERABLAUF MIT WENIGSTENS EINEM VORGEFERTIGTEN BRANDSCHUTZELEMENT**
WATER OUTLET WITH AT LEAST ONE PREFABRICATED FIRE PROTECTION ELEMENT
DISPOSITIF D'ÉCOULEMENT D'EAU DOTÉ D'AU MOINS UN ÉLÉMENT IGNIFUGE PRÉFABRIQUÉ

(30) Priorität: 28.01.2014 DE 102014100932
(43) Veröffentlichungstag der Anmeldung: 29.07.2015
(73) Patentinhaber: wedi GmbH, 48282 Emsdetten (DE)
(72) Erfinder: Wedi, Stephan, 48282 Emsdetten (DE)
(74) Vertreter: Ellberg, Nils

(56) Entgegenhaltungen:
- EP-A1- 1 362 961
- EP-A2- 1 528 307
- DE-A1-102004 006 250
- DE-A1-102008 031 018
- DE-A1-102011 001 253
- DE-U1- 9 416 491
- DE-U1- 20 101 589
- GB-A- 2 216 220

## Beschreibung

Die Erfindung betrifft einen rotationssymmetrischen, an einer Bodenöffnung einsetzbaren Wasserablauf, umfassend:
- ein Ablaufrohr mit einer Muffe,
- einen Ablauftopf, welcher mit einem in das Ablaufrohr mündenden Stützen endet,
- ein mit Hängelaschen versehenes Ringelement zum Aufhängen an der Bodenöffnung und zur Aufnahme des Ablauftopfes,
- wobei das Ringelement eine koaxial zur Achsausrichtung angeordnete zylindrische Wand und einen senkrecht zur Achsausrichtung liegenden Innenkragen aufweist,
- sowie wenigstens ein in den Wasserablauf eingebautes Brandschutzelement, welches aus einer unter Hitzeeinwirkung expandierbaren Brandschutzmasse gefertigt ist,
- wobei in das Ringelement eine Steckmuffe eingesetzt ist,
- das Brandschutzelement zwischen der Steckmuffe im Bereich der zylindrischen Wand des Ringelementes und dem Ablaufrohr platziert ist, und
- der Innenkragen einen Innendurchmesser aufweist, welcher einem Außendurchmesser der Muffe des Ablaufrohrs entspricht oder den Außendurchmesser geringfügig überschreitet.

Die beschriebene Konfiguration bewirkt, dass die unter Hitzeeinwirkung expandierende Brandschutzmasse sich gegen eine Innenfläche der Steckmuffe und nachfolgend die zylindrische Wand des Ringelements sowie den Innenkragen des Ringelements abstützt und die Expansion der Brandschutzmasse in Richtung Ablaufrohr sowie gegen einen Boden des Ablauftopfes gerichtet ist.

Ein an einer Bodenöffnung einsetzbarer und mit Brandschutzmasse versehener Wasserablauf der eingangs genannten Art ist der EP 1 362 961 B1 zu entnehmen. Mit der Brandschutzmasse ist ein im montierten Zustand nach unten zeigender Stutzen sowie ein tellerrandförmiger Außenkragen des Ringelementes beschichtet, wobei in die am Außenkragen befindliche Brandschutzmasse ein Rohrstück eingebettet ist, so dass das Ringelement mit dem Rohrstück und der Brandschutzmasse ein einstückiges Bauteil bilden. Nachteilig bei dem Wasserablauf gemäß EP 1 362 961 B1 ist, dass eine konzentrische Druckkraftverteilung, welche aus der ringförmigen Anordnung der Brandschutzmasse hervorgeht, nicht ausreichend effektiv für den Expansionsvorgang ist. Nachteilig ist es auch, dass die Brandschutzmasse während der Fertigung des besagten einstückigen Bauteils im zähflüssigen Zustand vorliegt, wodurch der Beschichtungsprozess zügig durchgeführt werden muss, sonst erstarrt die Brandschutzmasse und infolgedessen sind Korrekturen an der Beschichtung kaum möglich. Da die Beschichtung nur auf der Innenseite des Stutzens und des Außenkragens vorgesehen ist, müssen während des Beschichtungsprozesses technische Maßnahmen ergriffen werden, die die der Beschichtung abgewandte Außenfläche des Ringelementes schützen.

Aufgabe der Erfindung ist es, einen neuartigen Wasserablauf der im Oberbegriff angegebenen Art zu entwickeln, bei dem der bei der Expansion der Brandschutzmasse auftretende Druck so verteilt ist, dass er zuverlässig und blitzschnell die lichte Rohrweite des Ablaufrohrs schließen kann, wobei der Aufbau des Wasserablaufs so konzipiert sein soll, dass zum einen auf eine Beschichtung mit der Brandschutzmasse verzichtet werden kann und zum anderen die Brandschutzmasse montierbar bzw. demontierbar ist.

Diese Aufgabe ist durch einen rotationssymmetrischen, an einer Boden- bzw. Geschossdeckenöffnung einsetzbaren Wasserablauf gelöst, bei welchem
- die Steckmuffe derart in das Ringelement eingesetzt ist, dass sie sich am Innenkragen und an einer Innenfläche der zylindrischen Wand abstützt, und
- das Brandschutzelement segmentiert ist.

Von großem Vorteil ist, dass sich am Innenkragen und der zylindrischen Wand des Ringelementes wenigstens ein vorgefertigtes Brandschutzelement abstützen kann. Das vorgefertigte Brandschutzelement kann aus einer an sich bekannten Brandschutzmasse hergestellt sein. Solche expandierbaren Brandschutzmassen (Intumeszenzmassen) sind beispielsweise aus EP-OS 51 347 bzw. aus US-PS 39 55 987 bekannt und in DE 36 25 556 v. Bayer, Deutschland, ausführlich beschrieben. Die Intumeszenzmasse schäumt im Falle eines Brandes spontan auf und bildet dabei einen isolierenden und Feuer abweisenden Schaum aus, welcher den rückwärtigen, dem Feuer abgewandten Bereich gegen Feuer und Hitze schützt und auftretende Verwerfungen und Spalten gegen den Durchtritt von Rauch und Flammen verschließt. Die Masse beginnt bei Temperaturen von über 150°C bis 300°C aufzuschäumen und zu expandieren. Die Volumenzunahme liegt, je nach Zusammensetzung der Masse und Art der Erhitzung, zwischen 50% und 1000%.

Da das Brandschutzelement segmentiert ist, wird durch die im Brandfall expandierenden Brandschutzmassen-Segmente eine bereichsweise Druckkraft auf das Ablaufrohr ausgeübt. Eine bereichsweise, insbesondere punktuell auf das Ablaufrohr einwirkende Kraft führt zu einem schnelleren Aufbrechen oder Aufplatzen des Ablaufrohres bzw. seiner Struktur und damit zu einem schnelleren Eindringen und Verschließen des Ablaufes mit Brandschutzmasse und letztlich zu einer verbesserten Brandschutzwirkung.

Da das segmentierte Brandschutzelement zwischen dem Ablaufrohr und der zylindrischen Wand des Ringelementes platziert sind, weisen die Segmente vorzugsweise eine Gestalt auf, die diesem Freiraum angepasst ist oder sich entsprechend anpassen lässt. Bei den Brandschutzelementen kann es sich somit beispielsweise um entsprechend vorgefertigte Formteile handeln.

Die gattungsgemäßen Abläufe werden in aller Regel erst an der Baustelle, d.h. beim Einbau in eine Bodenöffnung zusammengesetzt. Sie bestehen somit zunächst aus einer Reihe von Einzelteilen, die an der Baustelle miteinander montiert werden. Der Einbau des Ringelementes ist bei der Montage grundsätzlich gewährleistet, da sich die Baugruppe ohne Ringelement nicht zu einem Ablauf komplettieren lässt. Das Brandschutzelement selbst hat jedoch auf die Funktion des Wasserablaufes im bestimmungsgemäßen Einsatz keinen Einfluss. Soweit der Einbau des Brandschutzelementes also bei der Montage beispielsweise vergessen wird, macht sich das Fehlen erst im Brandfall bemerkbar, indem nämlich wegen fehlendem Brandschutzelement der gewünschte Brandschutz nicht vorhanden ist. Vor diesem Hintergrund ist es von Vorteil, wenn die Brandschutzelemente in die Ringelemente eingeklebt oder formschlüssig eingesteckt, ggf. eingepresst sind.

Vorteilhaft ist, wenn das segmentierte Brandschutzelement federnd gegen eine Innenfläche der Steckmuffe drückt, wodurch die Positionierung des Brandschutzelementes erleichtert ist.

Vorzugsweise sind die Segmente des Brandschutzelementes derart aufgeteilt, dass die unter Hitzeeinwirkung expandierende Brandschutzmasse zumindest einen lichten Durchmesser des Ablaufrohrs klammerartig verschließen kann. Der Begriff "klammerartig" kann wie folgt erläutert werden:
Es ist sehr schwer, nahezu unmöglich, einen insbesondere dickwandigen Schlauch an einer Stelle gleichmäßig, ringförmig mit der Hand zusammenzupressen, um seine lichte Weite zu verschließen. Man kann ein besseres Ergebnis erzielen, wenn man es mit zwei Fingern, also von zwei Seiten des Schlauchs versucht. Dasselbe Prinzip lässt sich den bekannten, bei der Wundbehandlung verwendeten Drainageschläuchen entnehmen. Soll der Durchfluss von Wundexsudat unterbrochen werden, schiebt man den Drainageschlauch unter die Backen einer Klammer, welche auf den Drainageschlauch von zwei Seiten drückt.

Als vorgefertigte Brandschutzelemente können segmentierte Formstücke eingesetzt werden, welche vorzugsweise jeweils wenigstens einen in Richtung Ablaufrohr radial zeigenden Vorsprung aufweisen, so dass diese im eingebauten Zustand mit dem Ablaufrohr kontaktieren können.

Bei den segmentierten Formstücken aus der Brandschutzmasse handelt es sich um wenigstens zwei in einem peripheren Abstand von dem Ablaufrohr angeordnete, bremsschuhförmige Segmente, wobei die besagten Vorsprünge in ihrem Querschnitt pyramidenstumpfförmig sein können. Allerdings kann man auf die Vorsprünge verzichten.

Die segmentierten Formstücke können auch von einer fertigen, kunststoffummantelten Leiste mit Innenleben aus einem unter Hitzeeinwirkung expandierbaren Material, wie Graphit, ausgeführt sein.

Weiterhin ist es möglich, als Vorsprünge etwa pyramidenstumpfförmige, zwischen den Segmenten angeordnete Klötzchen vorzusehen. Diese ebenfalls aus Brandschutzmasse bestehenden Klötzchen verbessern die punktuelle Krafteinleitung im Brandfall, d.h. bei Expansion der Brandschutzmasse. Nicht ausgeschlossen ist darüber hinaus, dass in die dem Ablaufrohr zugerichtete Seite der Brandschutzelemente ein hitzebeständiges, vorzugsweise spitzes Element eingesetzt ist, welches analog zur Funktion eines Eizahnes auf dem Schnabel eines aus dem Ei schlüpfenden Kükens das Ablaufrohr aufbricht.

In einer bevorzugten Ausführungsform weist das wenigstens eine Brandschutzelement eine flexible, zahnriemenartige Gestaltung auf, so dass kreisbogenförmig gestaltet und zwischen der zylindrischen Wand des Ringelementes und dem Ablaufrohr platziert werden kann.

Vorteilhaft ist, wenn zwischen den Segmenten Formstücke aus nicht expandierendem Material angeordnet sind. Die bei Hitze nicht expandierenden Formstücke bilden einerseits Stützflächen aus, gegen die sich die expandierende Brandschutzmasse zusätzlich abstützen kann andererseits reduziert die dem Ablaufrohr zugerichtet Seite der nicht expandierenden Formstücke in diesem Bereich die Krafteinleitung und konzentriert damit die Krafteinleitung damit auf die Bereiche in denen die expandierende Brandschutzmasse unmittelbar auf das Ablaufrohr einwirken kann.

Als Materialien für die Formstücke können Kunststoffe, Metalle, Metalllegierungen, Silikatminerale, Sintermetalle oder -keramik, Sand, Kies, Beton, Porenbeton, Schaumglas, Steinzeug bzw. Verbundstoffe davon vorgesehen sein.

Die besagten Formstücke können auch aus feuerbeständigem Kunststoff oder Verbundstoff gefertigt sein.

Vorzugsweise ist der Innenkragen des Ringelementes so dimensioniert, dass er bis zum Ablaufrohr reicht oder dort einen geringfügigen Spalt bildet. Zwischen dem Innenkragen und dem Ablaufrohr und/oder zwischen dem Brandschutzelement und dem Ablaufrohr kann eine umlaufende Dichtung vorgesehen sein. Ein Außenkragen des Ringelementes ist durch die Brandschutzmasse nicht belegt.

Die Erfindung ist in einigen Ausführungsbeispielen anhand der Zeichnung näher erläutert. Die Figuren zeigen:
- Fig. 1: einen erfindungsgemäßen Wasserablauf in einem axialen Schnitt, in einem an einem Boden einer sanitären Anlage einmontierten Zustand;
- Fig. 2: eine Steckmuffe, in einem axialen Schnitt;
- Fig. 3: die Steckmuffe gemäß Fig. 2, lose eingesetzt am Innenkragen des an der Bodenöffnung aufgehängten Ringelementes, ebenso in einem axialen Schnitt;
- Fig. 4: Anordnung des Brandschutzelementes innerhalb der Steckmuffe, in einer Draufsicht auf ihre kreisförmige Kontur;
- Fig. 5: eine andere Anordnung des Brandschutzelementes innerhalb der Steckmuffe, ebenso in einer Draufsicht auf ihre kreisförmige Kontur;
- Fig. 6: die Steckmuffe gemäß Fig. 4, in einer perspektivischen Ansicht;
- Fig. 7: Detail des Ringelementes, in einer perspektivischen Ansicht;
- Fig. 8: eine andere Ausführungsform des zweiteiligen Brandschutzelementes, in einer perspektivischen Ansicht;
- Figuren 9 bis 11: weitere Anordnungen des Brandschutzelementes innerhalb der Steckmuffe, in einer Draufsicht auf ihre kreisförmige Kontur und
- Figuren 12 und 13: den Wasserablauf gemäß Fig. 1 nach dem Aufquellen der Brandschutzmasse, jeweils in einem vereinfachten axialen Schnitt.

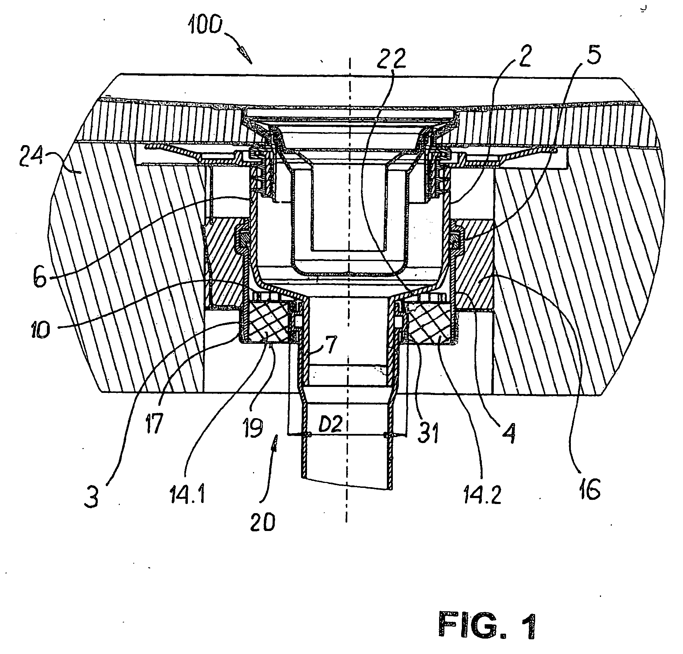

Die Fig. 1 zeigt einen an einer Bodenöffnung 20 eingesetzten, rotationssymmetrischen Wasserablauf 100, umfassend ein Ablaufrohr 1, einen Ablauftopf 2 mit einem in das Ablaufrohr 1 mündenden Stutzen 7, ein Ringelement 3 zum Aufhängen an der Bodenöffnung 20 und zur Aufnahme eines Brandschutzelementes 10. Der Wasserablauf 100 umfasst auch eine in das Ringelement 3 lose eingelegte Steckmuffe 4 mit einem umlaufenden Dichtungsring 5, welcher den Ablauftopf 2 an seinem zylindrischen Mantel 6 positionsführend und klemmend umgibt und außerdem flüssigkeitsdichtend ausgeführt sein kann. Der Mantel 6 des Ablauftopfes 2 geht über einen schräg liegenden Boden 22 in den besagten Stutzen 7 über. Weiterhin sind der Fig. 1 andere, nicht bezeichnete, übliche Standardteile zu entnehmen, welche oberhalb und innerhalb des Ablauftopfes 2 angeordnet sind.

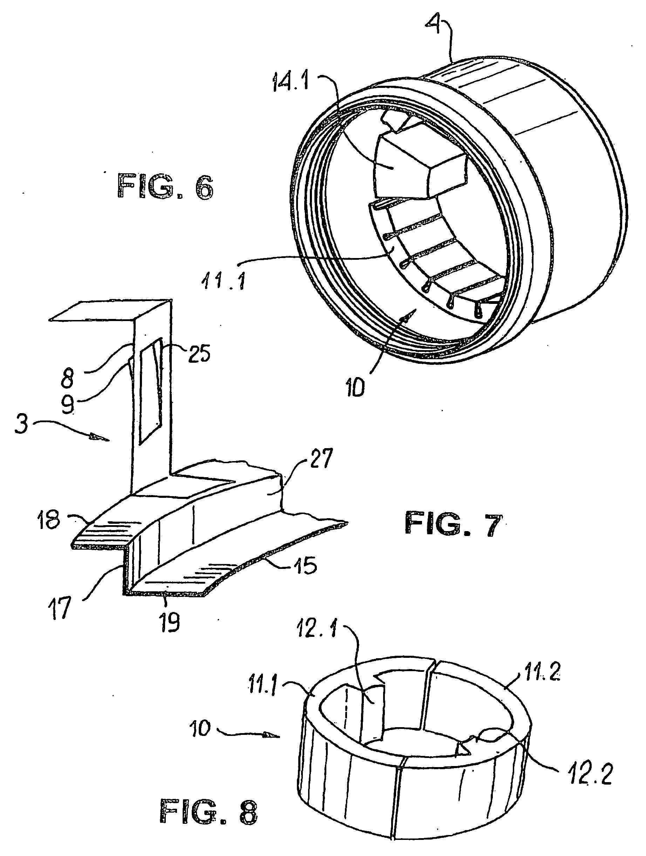

Das Ringelement 3 (vgl. Figuren 1, 3 und 7) weist eine zylindrische Wand 17 mit einer Innenfläche 27, einen Innenkragen 19, einen Außenkragen 18 und drei nach oben ragende, L-förmige Hängelaschen 8 (in Fig. 7 ist nur eine gezeigt), welche jeweils ein in einer fensterartigen Aussparung 25 integriertes, blattförmiges Federelement 9 aufweisen. Die Anzahl der Hängelaschen 8 kann variieren. Das Federelement 9 stabilisiert zusätzlich die Lage des an der Bodenöffnung 20 eingehängten Ringelementes 3. Zwischen der Steckmuffe 4 und der Bodenöffnung 20 ist ein nicht expandierbares, vorzugsweise nicht brennbares Füllmaterial 16 platziert, welches von dem Außenkragen 18 beginnend bis zur Oberkante der Steckmuffe 4 reicht. Dementsprechend kann das Füllmaterial 16 beispielsweise aus einem üblichen zementgebundenem Mörtelsystem, aus nicht brennbarem Hartschaum, Integralschaum oder anderen Schäumen mit brennhemmemden Zusätzen bestehen. Das Füllmaterial 16 kann schalldämmend sein, wenn es z. B. aus Mineralwolle oder einem anderen schalldämmenden Material gefertigt ist. Schließlich kann das Füllmaterial 16 aus einem Verbundstoff gefertigt sein, welches die beiden Eigenschaften, d. h. die Nichtbrennbarkeit und Schalldämmung aufweist.

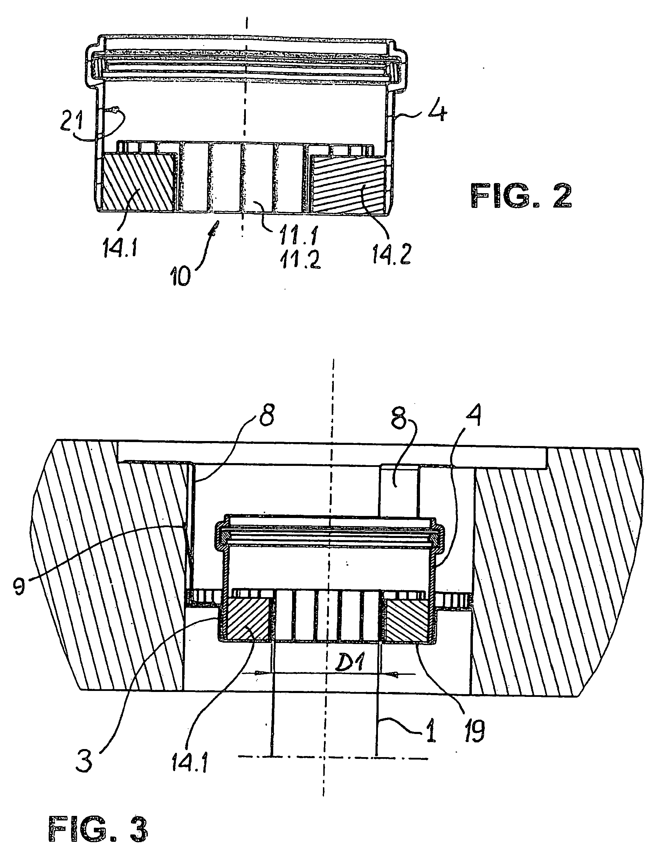

Wie insbesondere die Fig. 7 in Verbindung mit der Fig. 1 zeigt, ist die zylindrische Wand 17 koaxial zur Achsausrichtung des Wasserablaufs 100 angeordnet und setzt sich in einen Innenkragen 19 fort, der wiederum senkrecht zur Achsausrichtung liegt. Der Innenkragen 19 weist einen Innenrand 15 auf, welcher einen mit D1 bezeichneten Innendurchmesser des Innenkragens (vgl. Fig. 3) definiert. Der Innendurchmesser D1 entspricht einem Außendurchmesser D2 einer Muffe (31) des Ablaufrohrs 1 (vgl. Fig. 1) bzw. überschreitet den Außendurchmesser D2 geringfügig, so dass das Ablaufrohr 1 bei der Montage durch das Ringelement 3 geführt werden kann.

Erfindungswesentlich ist, dass der unterhalb des Bodens 22 des Ablauftopfes 2 liegende Innenkragen 19 im einmontierten Zustand nahezu bis zum Ablaufrohr 1 reicht und darüber hinaus ausreichend viel Platz für die Unterbringung des vorgefertigten, segmentierten Brandschutzelementes 10 bietet.

Gemäß Fig. 8 setzt sich das Brandschutzelement 10 aus zwei etwa bremsschuhförmigen Segmenten 11.1, 11.2 zusammen, welche jeweils einen nach innen zeigenden, pyramidenstumpfförmigen Vorsprung 12.1, 12.2 aufweisen.

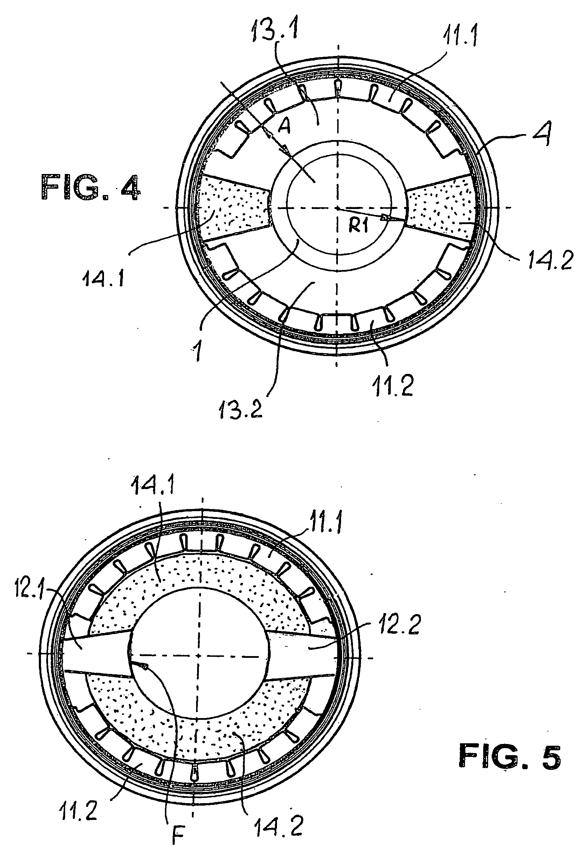

Das Brandschutzelement 10 gemäß Figuren 4, 5 und 6 weist ebenso zwei etwa bremsschuhförmige Segmente 11.1, 11.2 auf, wobei zwischen den besagten Segmenten Vorsprünge 12.1, 12.2 bzw. Formstücke 14.1, 14.2 liegen. Während die Vorsprünge 12.1, 12.2 aus Brandschutzmasse gefertigt sind, bestehen die Formstücken 14.1, 14.2 aus nicht expandierendem Material, wie Porenbeton oder Steinzeug. Die Vorsprünge 12.1, 12.2 bzw. die Formstücke 14.1, 14.2 können im eingebauten Zustand (vgl. Fig. 4 u. 5) mit ihren Flächen F mit dem Ablaufrohr 1 kontaktieren. Die Segmente 11.1, 11.2 liegen jeweils in einem peripheren Abstand A von dem Ablaufrohr 1, so dass zwei Hohlkammer 13.1, 13.2 vorhanden sind, welche gemäß Fig. 5 optional mit Formstücken 14.1, 14.2, gefüllt sein können.

Bei der Ausführung nach Fig. 5 dehnt sich die im Brandfall expandierende Brandschutzmasse der Segmente 11.1, 11.2 zunächst in Richtung der Vorsprünge 12.1, 12.2 aus und drückt von dort gemeinsam mit der Brandschutzmasse der Vorsprünge 12.1, 12.2 in diesem Bereich punktuell Richtung Abflussrohr 1. Die Segmente 11.1, 11.2 weisen im dargestellten Ausführungsbeispiel eine zum Ablaufrohr 1 hin gerichtete sich verdickende Form auf. Sie können aber auch eine umgekehrt Konizität oder eine rechteckige Form aufweisen.

Bei der Ausführung nach Fig. 6 dehnt sich die Brandschutzmasse der Segmente 11.1,11.2 unmittelbar in Richtung Abflussrohr 1 aus, wobei das Abflussrohr jedoch im Bereich der hitzebeständigen Formstücke 14.1, 14.2 keine bzw. nur eine geringe Kraft auf das Abflussrohr ausgeübt wird, so dass auch hier eine punktuelle bzw. bereichsweise Lasteinleitung erfolgt. Da im Brandfall nicht nur die Brandschutzmasse expandiert sondern auch die nicht hitzebeständigen Kunststoffteile schmelzen, kann es von Vorteil sein, wenn die Formstücke 14.1, 14.2 in ihrer Einbaulage fixiert sind, beispielsweise durch Ankleben an das hitzebeständige Ringelement 3.

Vorzugsweise sind die in Figuren 4, 5 und 6 gezeigten Segmente 11.1, 11.2 aus einem zahnriemenartigen Strang auf ein vorbestimmtes Maß abgelängt. Solche Segmente lassen sich einfacher in die Steckmuffe 4 bzw. in das Ringelement 3 per Hand einbauen. Insbesondere vorteilhaft ist, wenn die Ausmaße der Segmente gemäß Figuren 4, 5 bzw. 8 derart gewählt sind, dass sie federnd gegen eine Innenfläche 21 der Steckmuffe 4 drücken können oder wenn die Segmente anders, beispielsweise durch Kleben, mit der Steckmuffe 4 verbunden sind.

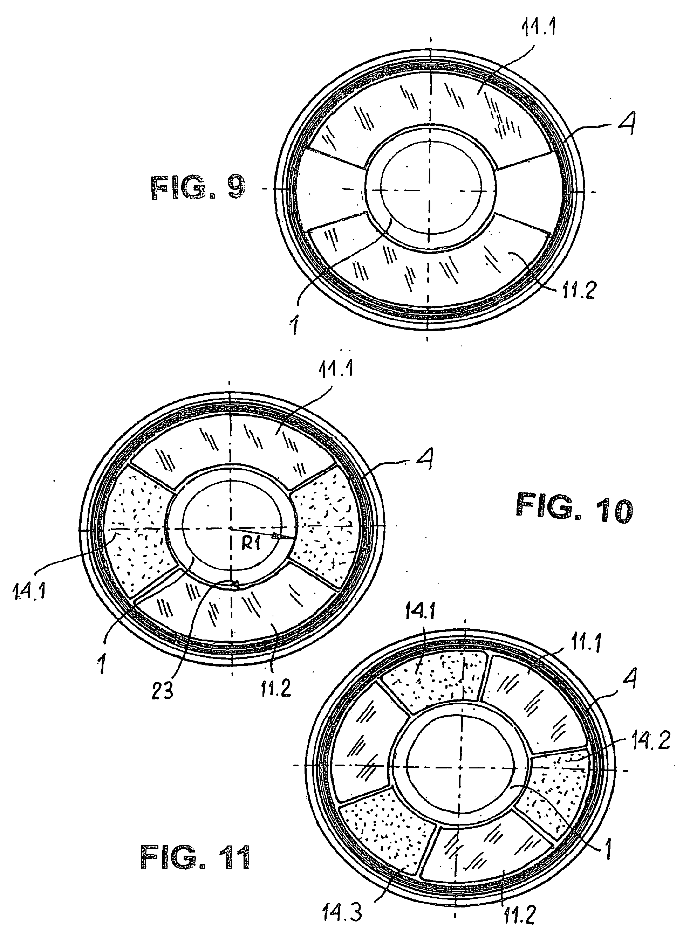

Schließlich sind in Figuren 9 bis 11 die einfachsten Anordnungen des vorgefertigten Brandschutzelementes 10 gezeigt. Gemäß Figuren 9 und 10 sind zwei nahezu bis zum Ablaufrohr 1 reichende Segmente 11. 1, 11.2 aus Brandschutzmasse vorgesehen, welche mit ihren Innenflächen 23 aufeinander gerichtet sind. Gemäß Fig. 10 sind innerhalb der Steckmuffe 4 zwei segmentartige Formstücke 14.1, 14.2 aus Porenbeton angeordnet, welche jeweils zwischen den Segmenten 11. 1, 11.2 platziert sind.

Das Brandschutzelement gemäß Fig. 11 zeigt drei Segmente 11. 1, 11.2, 11.3 aus Brandschutzmasse und drei segmentartige Formstücke 14.1, 14.2, 14.3 aus Porenbeton in einer versetzten Anordnung. Alle Segmente 11. 1, 11.2, 11.3 und Formstücke 14.1, 14.2, 14.3 reichen nahezu bis zum Ablaufrohr 1.

### Funktionsweise (Figuren 1, 5 und 12 bzw. 13):

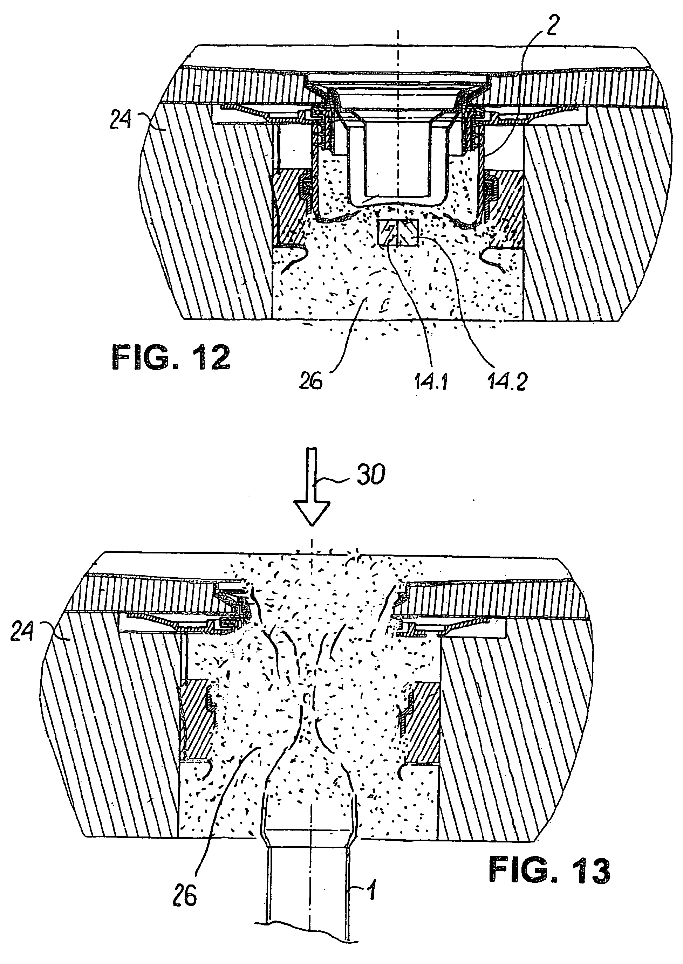

Der an einer Geschossdecke 24 einmontierte Wasserablauf 100 wurde einem firmeneigenen Brandschutztest unterzogen. Der künstliche Brandherd erzeugt Rauch und Flammen, die bis zur Unterseite der Geschossdecke 24 reichen. Dabei beginnen der aus Kunststoff hergestellte Stutzen 7 des Ablauftopfes 2 und das Ablaufrohr 1 bei Erreichen bzw. Überschreiten des Schmelzpunktes sich zu verflüssigen. Allerdings quillt die Brandschutzmasse der Segmente 11.1, 11.2 und der Vorsprünge 12.1, 12.2 aufgrund der erhöhten Temperatur sehr schnell auf, bevor der Stutzen 7 und das Ablaufrohr 1 aus Kunststoff vollständig verschmelzen. Der erzeugte Druck verursacht eine "Implosion" aller Teile, die von den Segmenten 11.1, 11.2 umschlossen sind, so dass der Durchtritt der Flammen verschlossen bleibt (vgl. Fig. 12). Dabei entsteht eine Schmelze 26 bzw. Schaum, welcher alle Wege nach oben schließt. Abgeschnitten wird auch die Sauerstoffzufuhr (vgl. Pfeil 30 gemäß Fig. 13) von oben. Den Druck und den verschließenden Effekt verstärken noch die Formstücke 14.1, 14.2, 14.3 aus Porenbeton, da die expandierende Brandschutzmasse die Formstücke nicht zusammendrücken und zerstören kann und dem freien Weg folgend sich stärker gegen das Ablaufrohr 1 und gegen den Boden 22 des Ablauftopfes 2 richtet. Der Druck der expandierenden Brandschutzmasse deformiert auch das Ringelement 3 und die Steckmuffe 4, welche teilweise schmilzt.

Gemäß Fig. 13 ist der Wasserablauf 100 nach dem Expandieren der Brandschutzmasse völlig mit der Schmelze 26 gefüllt. Die Schmelze 26 ist durch das Expandieren der Brandschutzmasse des Brandschutzelementes 10 gemäß Fig. 9 entstanden. Die expandierenden Segmente 11.1, 11.2 haben einen sehr starken Druck auf das Ablaufrohr 1 und auf den Ablauftopf 2, klammerartig in Diagonalrichtung von beiden Seiten, ausgeübt, so dass nicht nur der lichte Durchmesser D3 des Ablaufrohrs 1, sondern auch die ganze Bodenöffnung 20 blitzschnell verschlossen wurde. Das Ablaufrohr 1 und der Ablauftopf 2 mit Siphon sind aus Kunststoff gefertigt und verschmelzen zusammen mit der Brandschutzmasse.

**Bezugszeichenliste:**

| | |
|---|---|
| 1 | Ablaufrohr |
| 2 | Ablauftopf |
| 3 | Ringelement |
| 4 | Steckmuffe |
| 5 | Dichtungsring |
| 6 | Mantel |
| 7 | Stutzen |
| 8 | Hängelasche |
| 9 | Federelement |
| 10 | Brandschutzelement |
| 11.1, 11.2, ... 11.n | Segment |
| 12.1, 12.2 | Vorsprung |
| 13.1, 13.2, 13.3 | Hohlkammer |
| 14.1, 14.2, .... 14.n | Formstück |
| 15 | Innenrand |
| 16 | Füllmaterial |
| 17 | Mittelsteg |
| 18 | Außenkraqen |
| 19 | Innenkraqen |
| 20 | Bodenöffnung |
| 21 | Innenfläche |
| 22 | Boden |
| 23 | Innenfläche |
| 24 | Geschossdecke |
| 25 | Aussparung |
| 26 | Schmelze |
| 27 | Innenfläche (von 17) |
| 30 | Formstück Pfeil (Fig. 13) |
| 31 | Muffe (von 1) |
| 100 | Wasserablauf |
| A | Abstand |
| D1 | Innendurchmesser (von 3) |
| D2 | Außendurchmesser (von 31) |
| D3 | lichter Durchmesser (v. 1) |
| F | Fläche |
| R1 | Radius |

## Patentansprüche

1. Rotationssymmetrischer, an einer Bodenöffnung (20) einsetzbarer Wasserablauf (100), umfassend:
- ein Ablaufrohr (1) mit einer Muffe (31),
- einen Ablauftopf (2), welcher mit einem in das Ablaufrohr (1) mündenden Stutzen (7) endet,
- ein mit Hängelaschen (8) versehenes Ringelement (3) zum Aufhängen an der Bodenöffnung (20) und zur Aufnahme des Ablauftopfes (2),
- wobei das Ringelement (3) eine koaxial zur Achsausrichtung angeordnete zylindrische Wand (17) und einen senkrecht zur Achsausrichtung liegenden Innenkragen (19) aufweist,
- sowie wenigstens ein in den Wasserablauf eingebautes Brandschutzelement (10), welches aus einer unter Hitzeeinwirkung expandierbaren Brandschutzmasse gefertigt ist,
- wobei in das Ringelement (3) eine Steckmuffe (4) eingesetzt ist,
- das Brandschutzelement (10) zwischen der Steckmuffe (4) im Bereich der zylindrischen Wand (17) des Ringelementes (3) und dem Ablaufrohr (1) platziert ist, und
- der Innenkragen (19) einen Innendurchmesser (D1) aufweist, welcher einem Außendurchmesser (D2) der Muffe (31) des Ablaufrohrs (1) entspricht oder den Außendurchmesser (D2) geringfügig überschreitet,
so dass die unter Hitzeeinwirkung expandierbare Brandschutzmasse sich
- gegen eine Innenfläche (21) der Steckmuffe (4) und nachfolgend die zylindrische Wand (17) des Ringelements (3) sowie
- den Innenkragen (19) des Ringelements (3) abstützt und
- die Expansion der Brandschutzmasse in Richtung Ablaufrohr (1) sowie gegen einen Boden (22) des Ablauftopfes (2) gerichtet ist,
**dadurch gekennzeichnet, dass**
- die Steckmuffe (4) derart in das Ringelement (3) eingesetzt ist, dass sie sich am Innenkragen (19) und an einer Innenfläche (27) der zylindrischen Wand (17) abstützt, und
- das Brandschutzelement (10) segmentiert ist.

2. Wasserablauf (100) nach Anspruch 1, **dadurch gekennzeichnet, dass** das Brandschutzelement (10) in die Steckmuffe (4) eingeklebt ist.

3. Wasserablauf (100) nach Anspruch 1, **dadurch gekennzeichnet, dass** das Brandschutzelement (10) federnd gegen die Innenfläche (21) der Steckmuffe (4) drückt.

4. Wasserablauf (100) nach einem der Ansprüche 1 - 3, **dadurch gekennzeichnet, dass** das Brandschutzelement (10) in wenigstens zwei bremsschuhförmige Segmente (11.1, 11.2, ... ,11.n) derart aufgeteilt ist, dass die unter Hitzeeinwirkung expandierende, segmentierte Brandschutzmasse einen lichten Durchmesser (D3) des Ablaufrohrs (1) klammerartig verschließt.

5. Wasserablauf (100) nach Anspruch 4, **dadurch gekennzeichnet, dass** Segmente (11.1, 11.2) jeweils wenigstens einen nach innen zeigenden Vorsprung (12.1, 12.2, ... ,12.n) aufweisen, welcher im eingebauten Zustand mit dem Ablaufrohr (1) kontaktiert.

6. Wasserablauf (100) nach Anspruch 5, **dadurch gekennzeichnet, dass** als Vorsprünge (12.1, 12.2) etwa pyramidenstumpfförmige, zwischen den Segmenten (11.1, 11.2, ... 11.n) angeordnete Klötzchen vorgesehen sind.

7. Wasserablauf (100) nach einem der Ansprüche 1 bis 4, **dadurch gekennzeichnet, dass** die Segmente (11.1, 11.2, ... 11.n) eine zahnriemenartige Kontur aufweisen.

8. Wasserablauf (100) nach Anspruch 7, **dadurch gekennzeichnet, dass** zwischen den Segmenten (11.1, 11.2, ... 11.n) Formstücke (14.1, 14.2, ... 14.n) aus nicht expandierendem Material eingesetzt sind.

9. Wasserablauf (100) nach Anspruch 8, **dadurch gekennzeichnet, dass** die Materialien der Formstücke (14.1, 14.2, ... 14.n) aus der Gruppen: Kunststoffe, Metalle, Metalllegierungen, Silikatminerale, Sintermetalle oder -keramik, Sand, Kies, Beton, Porenbeton, Schaumglas, Steinzeug bzw. Verbundstoffe davon gewählt sind.

10. Wasserablauf (100) nach Anspruch 8, **dadurch gekennzeichnet, dass** die Formstücke (14.1, 14.2, .... , 14.n) aus feuerbeständigem Kunststoff gefertigt sind.

## Claims

1. Rotationally symmetrical water drain (100) which can be inserted in a floor opening (20) and comprises:
- a drain pipe (1) having a socket (31),
- a drain cup (2), which terminates with a connector (7) which opens out into the drain pipe (1),
- a ring element (3), which is provided with suspension lugs (8) and is intended for fitting on the floor opening (20) and for accommodating the drain cup (2),
- wherein the ring element (3) has a cylindrical wall (17), which is arranged coaxially in relation to the axial orientation, and an inner collar (19), which is located perpendicularly to the axial orientation,
- and at least one fire-protection element (10), which is installed in the water drain and is produced from a fire-protection compound which can be made to expand under the action of heat,
- wherein a plug-in sleeve (4) is inserted into the ring element (3),
- the fire-protection element (10) is placed between the plug-in sleeve (4), in the region of the cylindrical wall (17) of the ring element (3), and the drain pipe (1), and
- the inner collar (19) has an internal diameter (D1) which corresponds to an external diameter (D2) of the socket (31) of the drain pipe (1), or slightly exceeds the external diameter (D2),
and therefore the fire-protection compound, which can be made to expand under the action of heat,
- is supported against an inner surface (21) of the plug-in sleeve (4) and subsequently the cylindrical wall (17) of the ring element (3) and also
- the inner collar (19) of the ring element (3), and
- the fire-protection compound expands in the direction of the drain pipe (1) and towards a base (22) of the drain cup (2),
**characterized in that**
- the plug-in sleeve (4) is inserted into the ring element (3) such that it is supported on the inner collar (19) and on an inner surface (27) of the cylindrical wall (17), and
- the fire-protection element (10) is segmented.

2. Water drain (100) according to Claim 1, **characterized in that** the fire-protection element (10) is adhesively bonded into the plug-in sleeve (4).

3. Water drain (100) according to Claim 1, **characterized in that** the fire-protection element (10) pushes resiliently against the inner surface (21) of the plug-in sleeve (4).

4. Water drain (100) according to one of Claims 1-3, **characterized in that** the fire-protection element (10) is divided, up into at least two brake-shoe-form segments (11.1, 11.2, ..., 11.n) such that the segmented fire-protection compound, which can be made to expand under the action of heat, closes an inside diameter (D3) of the drain pipe (1) in a clamp-like manner.

5. Water drain (100) according to Claim 4, **characterized in that** segments (11.1, 11.2) each have at least one inwardly oriented protrusion (12.1, 12.2, ..., 12.n) which, in the installed state, are in contact with the drain pipe (1).

6. Water drain (100) according to Claim 5, **characterized in that** the protrusions (12.1, 12.2) provided are blocks which are approximately in the form of truncated pyramids and are arranged between the segments (11. 1, 11.2, ..., 11.n).

7. Water drain (100) according to one of Claims 1 to 4, **characterized in that** the segments (11.1, 11.2, ..., 11.n) have a toothed-belt-like contour.

8. Water drain (100) according to Claim 7, **characterized in that** shaped pieces (14.1, 14.2, ..., 14.n) made of non-expanding material are inserted between the segments (11.1, 11.2, ..., 11.n).

9. Water drain (100) according to Claim 8, **characterized in that** the materials of the shaped pieces (14.1, 14.2, ..., 14.n) are selected from the following groups: plastics, metals, metal alloys, silicate minerals, sintered metals or sintered ceramics, sand, gravel, concrete, aerated concrete, foam glass, stoneware or composites thereof.

10. Water drain (100) according to Claim 8, **characterized in that** the shaped pieces (14.1, 14.2, ..., 14.n) are produced from fire-resistant plastics material.

## Revendications

1. Evacuation d'eau (100) à symétrie de rotation, apte à être insérée sur une ouverture (20) ménagée dans le sol et comprenant :
un tube d'évacuation (1) doté d'un manchon (31),
une cuvette d'évacuation (2) qui se termine par une tubulure (7) qui débouche dans le tube d'évacuation (1),
un élément annulaire (3) doté de pattes de suspension (8) et destiné à être suspendu sur l'ouverture (20) ménagée dans le sol pour reprendre la cuvette d'évacuation (2),
l'élément annulaire (3) présentant une paroi cylindrique (17) disposée coaxialement par rapport à l'orientation axiale et un collet intérieur (19) situé perpendiculairement à l'orientation axiale,
ainsi qu'au moins un élément (10) de protection contre le feu intégré dans l'évacuation d'eau et réalisé en une pâte de protection contre le feu expansible sous l'action de la chaleur,
un manchon enfichable (4) étant inséré dans l'élément annulaire (3),
l'élément (10) de protection contre le feu étant placé entre le manchon enfichable (4) et le tube d'évacuation (1), au niveau de la paroi cylindrique (17) de l'élément annulaire (3) et
le collet intérieur (19) présentant un diamètre intérieur (D1) qui correspond au diamètre extérieur (D2) du manchon (31) du tube d'évacuation (1) ou qui dépasse légèrement le diamètre extérieur (D2),
de telle sorte que la pâte de protection contre le feu expansible sous l'action de la chaleur s'appuie contre une surface intérieure (21) du manchon enfichable (4) et ensuite sur la paroi cylindrique (17) de l'élément annulaire (3) et
soutient le collet intérieur (19) de l'élément annulaire (3),
l'expansion de la pâte de protection contre le feu étant orientée en direction du tube d'évacuation (1) ainsi que vers le fond (22) de la cuvette d'évacuation (2),
**caractérisée en ce que**
le manchon enfichable (4) est inséré dans l'élément annulaire (3) de telle sorte qu'il s'appuie sur le collet intérieur (19) et sur une surface intérieure (27) de la paroi cylindrique (17) et
**en ce que** l'élément (10) de protection contre le feu est segmenté.

2. Evacuation d'eau (100) selon la revendication 1, **caractérisée en ce que** l'élément (10) de protection contre le feu est collé dans le manchon enfichable (4).

3. Evacuation d'eau (100) selon la revendication 1, **caractérisée en ce que** l'élément (10) de protection contre le feu repousse élastiquement la surface intérieure (21) du manchon enfichable (4).

4. Evacuation d'eau (100) selon l'une des revendications 1 à 3, **caractérisée en ce que** l'élément (10) de protection contre le feu est divisé en au moins deux segments (11.1, 11.2, ..., 11.n) en forme de sabot de frein, de telle sorte que la pâte de protection contre le feu segmentée et expansible sous l'action de la chaleur ferme à la manière d'une pince le diamètre intérieur (D3) du tube d'évacuation (1).

5. Evacuation d'eau (100) selon la revendication 4, **caractérisée en ce que** chacun des segments (11.1, 11.2) présente au moins une saillie (12.1, 12.2, ..., 12.n) tournée vers l'intérieur et en contact avec le tube d'évacuation (1) en situation montée.

6. Evacuation d'eau (100) selon la revendication 5, **caractérisée en ce que** les saillies (12.1, 12.2) prévues sont des petits blocs en forme de tronc de pyramide disposés entre les segments (11.1, 11.2, ..., 11.n).

7. Evacuation d'eau (100) selon l'une des revendications 1 à 4, **caractérisée en ce que** les segments (11.1, 11.2, ..., 11.n) ont un contour en forme de courroie crantée.

8. Evacuation d'eau (100) selon la revendication 7, **caractérisée en ce que** des pièces moulées (14.1, 14.2, ..., 14.n) en matériau non expansible sont insérées entre les segments (11.1, 11.2, ..., 11.n).

9. Evacuation d'eau (100) selon la revendication 8, **caractérisée en ce que** les matériaux des pièces moulées (14.1, 14.2, ..., 14.n) sont sélectionnés dans l'ensemble constitué des matières synthétiques, des métaux, des alliages de métaux, des silicates minéraux, des métaux ou céramiques frittés, du sable, du gravier, du béton, du béton poreux, du verre moussé, de la pierraille et des composites de ces matériaux.

10. Evacuation d'eau (100) selon la revendication 8, **caractérisée en ce que** les pièces moulées (14.1, 14.2, ..., 14.n) sont réalisées en matière synthétique résistant au feu.
